# EUROPÄISCHE PATENTSCHRIFT

(11) **EP 1 975 570 B1**
(45) Veröffentlichungstag und Bekanntmachung des Hinweises auf die Patenterteilung: **15.10.2014**
(21) Anmeldenummer: 08153613.8
(22) Anmeldetag: 28.03.2008
(51) Int. Cl.: G01D 5/20

(54) **Messvorrichtung für eine Winkelmessung mit einem induktiven Wirbelstrombetätigungselement**
Measuring device for angle measurement comprising an inductive eddy current actuating element
Dispositif pour la mesure d'un angle comprenant un élément d'actionnement à courant de Foucault inductif

(30) Priorität: 30.03.2007 DE 102007015524
(43) Veröffentlichungstag der Anmeldung: 01.10.2008
(73) Patentinhaber: ZF Friedrichshafen AG, 80846 Friedrichshafen (DE)
(72) Erfinder: Luber, Thomas, 92256 Hahnbach (DE); Götz, Hans-Ludwig, 92256 Hahnbach (DE); Keck, Werner, 92237 Sulzbach-Rosenberg (DE); Beck, Werner, 92224 Amberg (DE)

(56) Entgegenhaltungen:
- EP-A1- 1 164 358
- EP-A2- 0 295 609
- EP-A2- 1 083 408
- EP-A2- 1 225 426
- EP-A2- 1 672 323
- WO-A1-2004/027994
- US-A1- 2006 022 125

## Beschreibung

Die Erfindung betrifft eine Messvorrichtung nach dem Oberbegriff des Patentanspruchs 1. Eine derartige Vorrichtung ist bspw. aus der Druckschrift EP 1 672 323 A2 der Anmelderin bekannt.

Solche Betätigungselemente werden in einem vorgegebenen Abstand über eine Reihe von dicht aneinander liegenden Flachspulen (auch planare Spulen genannt) hinwegbewegt. Es handelt sich dabei um eine Relativbewegung, bei der im Prinzip entweder das induktive Betätigungselement oder die Reihe von Flachspulen oder beides bewegt werden kann. Für die Messung kommt es nur auf die Relativbewegung an.

Die EP1225426 A2 beschreibt einen berührungslosen, linearen Positionssensor für Bewegungssteuerungsanwendungen.

In der EP 0 295 609 A2 werden Wicklungen als gedruckte Schaltung für geschirmte Induktivitätssensoren, insbesondere Sensoren zur Füllstandsmessung, offenbart.

Die Patentschrift EP 1 083 408 B1 betrifft einen Winkelpositionssensor mit einem induktiven Dämpfungs-Koppler und insbesondere einen kontaktlosen Sensor mit induktiv gekoppelten Sende- und Empfangsplatten mit einem dazwischen gestellten bzw. geschalteten drehbaren Koppler.

In der EP1164358 A1 wird ein ein induktives Längenmesssystem vorgestellt, das durch die Abtastung von einem Maßstab mit einer Teilung von periodisch variabler Reluktanz und einem Spulensystem in einer linearen Anordnung Informationen betreffend die Position bzw. die Bewegung des Spulensystems bezüglich des Maßstabs erfassen kann.

Die US 2006/0022125 A1 beschreibt einen Verschiebungssensor, der einen Erfassungsabschnitt mit einer Spule umfasst, der derart angeordnet ist, dass sich eine relative Position zu einer magnetischen Antwort-Substanz entsprechend einer Verschiebung eines zu messenden Objekts ändert.

Die EP 1 672 323 A2 beschreibt eine Sensoreinheit mit versetzten Betätigungsflächen.

Der Zweck der Anordnung ist eine Messvorrichtung, bei der durch eine Wirbelstromdämpfung die Induktivität von im Wesentlichen drei Spulen der Reihe beeinflusst wird. Eine lineare Anordnung einer Flachspulenreihe ist z. B. in Figur 5 der gattungsbildenden Druckschrift gezeigt, eine kreisbogenförmige Spulenreihe ist z. B. in Figur 15 gezeigt. Es gilt, die Position des Schlittens oder Rotors relativ zur Spulenreihe festzustellen, also eine Weg- oder Winkelmessung vorzunehmen.

Als günstig hat sich eine generell rautenförmige Umrissform des induktiven Betätigungselements erwiesen, die in Bewegungsrichtung soweit ausgedehnt ist, dass durch die Wirbelstromdämpfung die Induktivität von im Wesentlichen drei Spulen der Reihe beeinflusst wird. Bei dieser Größenrelation lassen sich die Messsignale der Spulen am genauesten auswerten. Insbesondere lässt sich aus drei Messpunkten, die von Null abweichen, eine näherungsweise Glockenkurve konstruieren, deren Scheitelpunkt das Auswertungsergebnis des Weg- oder Winkelsignals darstellt.

Es hat sich als optimal erwiesen, wenn die rautenförmige Umrissform im Wesentlichen drei Spulenelemente überdeckt, d. h. die Induktivität von drei Spulen durch Wirbelstromdämpfung beeinflusst wird. Wenn die Raute beispielsweise genau über einem Spulenelement der drei Spulenelemente liegt, so sollen die benachbarten Spulenelemente einen erkennbar von Null verschiedenen Signalwert erzeugen, um die Glockenkurve zwecks Auswertung sicher konstruieren zu können. Wenn die Raute andererseits genau zwischen zwei Spulen liegt, so sollen die Nachbarspulen (drittes und ein viertes Spulenelement) immer noch von Null verschiedene Signale erzeugen. Im Durchschnitt aller möglichen Aufenthaltsorte des Betätigungselements wird dann die Induktivität von drei Spulen beeinflusst. Wenn die Raute kürzer gewählt würde, so würden an manchen Messpunkten (Aufenthaltsorten) nur zwei Signalwerte erscheinen und nicht zur Konstruktion der Glockenkurve ausreichen; wenn die Länge der Raute grösser gewählt würde, so würde die Glockenkurve unnötig breit und der Scheitelpunkt wäre nicht mehr genau genug zu bestimmen (zu geringe Ortsselektivität). Auch für einen besonderen Anwendungsfall, bei dem die Spulenreihe ungleichmäßig verteilte Spulen aufweisen, oder wenn gar mit dem Ausfall einer Spule zu rechnen wäre, stellt die Beeinflussung von durchschnittlich drei benachbarten Spulen das Optimum dar.

In der gattungsbildenden Druckschrift ist über die Rautenform hinausgehend offenbart, dass man unter Umständen mit runden oder kreisförmigen Bedämpfungsflächen bessere Ergebnisse, d. h. besser ineinander greifende Dämpfungskurven, erzielen könnte. Genauere Untersuchungen haben nun ergeben, dass dann die Messungenauigkeiten zu groß wären und dass rundere Umrissformen kontraproduktiv sind. Aufgabe der vorliegenden Erfindung ist es, eine Messvorrichtung anzugeben, mit welcher ausgehend von dieser Erkenntnis, eine weitere Erhöhung der Messgenauigkeit von induktiven Sensoren möglich ist.

Diese Aufgabe wird gelöst mit den Merkmalen des geltenden Patentanspruchs1. Vorteilhafte Ausgestaltungen der Erfindung sind Gegenstand von abhängigen Ansprüchen.

Die Erfindung zeichnet sich aus durch eine Messvorrichtung für eine Winkelmessung, um eine Position eines einzigen Bedämpfungselements in Form einer einzigen Raute der Messvorrichtung relativ zu einer Spulenreihe festzustellen. Das einzige Bedämpfungselement der Messvorrichtung ist in einem vorgegebenen Abstand über der als eine Reihe von dicht aneinander liegenden Sensorspulen, die als Flachspulen oder planare Spulen ausgeformt sind, ausgebildeten Spulenreihe relativ hinwegbewegbar, um durch eine Wirbelstromdämpfung die Induktivität von im Wesentlichen drei Sensorspulen zu beeinflussen. Die in Richtung der relativen Bewegung liegende Mittellinie des Bedämpfungselements ist ein Kreisbogen und es wird eine kreisbogenförmige Reihenanordnung der Sensorspulen zwecks Winkelmessung überstrichen. Gemäß der Erfindung sind mindestens zwei benachbarte Kanten einer Rautenumrissform des Bedämpfungselements nach innen gekrümmt sind, derart, dass die im Inneren des Kreisbogens liegenden Kanten stärker gekrümmt sind als die nach außen weisenden Kanten der Rautenumrissform und derart, dass die außen liegenden Kanten konkav nach innen gekrümmt oder ungekrümmt oder konvex nach außen gekrümmt sind. Eine Länge des Bedämpfungselements entspricht einer dreifachen Länge einer der Sensorspulen. Die Messvorrichtung weist ferner eine Einrichtung zum Einspeisen eines Wechselstroms in jede der Sensorspulen und eine Einrichtung zum Einlesen eines Spannungswerts von jeder der Sensorspulen auf, wobei die Spannungswerte proportional zu einer durch die Wirbelstromdämpfung der Sensorspulen durch das Bedämpfungselement beeinflussten Induktivität der Sensorspulen sind.

Als Lösung hat sich überraschend eine Abweichung von der Rautenform durch konkave Kanten ergeben. Bereits durch zwei konkave Kanten kann die Annäherung der örtlich verteilten Messpunkte an die Glockenform verbessert werden. Durch eine Krümmung der Mittellinie zwecks Winkelmessung wird die konkave Einbuchtung der zwei innenliegenden Kanten verstärkt. Entsprechend kann eine Einbuchtung der äußeren Kanten, die für die lineare Wegmessung zweckmäßig sein kann, für die Winkelmessung vermindert oder sogar über-kompensiert werden. Wenn der Krümmungsradius aufgrund der erforderlichen Winkelmessung kleiner wird als derjenige Kantenkrümmungsradius, der aufgrund der Spulengeometrie ortsselektiv zweckmäßig ist, so können die äußeren Kanten sogar konvex nach außen gebogen sein.

Die Erfindung hat den Vorteil, dass die Anpassung der geometrischen Form der Bedämpfungselemente leichter durchzuführen ist als eine Änderung der elektronischen Auswertefunktion. Für die lineare Wegmessung wurde ermittelt, dass ein Bedämpfungsblech oder eine Bedämpfungsfolie mit der Form einer (an den vier Kanten) modifizierten Raute die Signalauswertung in dem Sinne positiv beeinflusst, dass die drei Messpunkte in jeder Messposition gut auf der vorgegebenen Glockenkurve liegen. Die danach noch vorhandenen Messfehler der einzelnen Spulensignale sind für die Auswertung unerheblich. Weiter unten wird dargelegt, dass das Heißprägeverfahren für diese scharfkantigen und spitzwinkligen Umrissformen besonders geeignet ist.

Die für die lineare Wegmessung ermittelte geometrische Form des Bedämpfungselements wird gemäß der Erfindung bei Winkelpositionsbestimmungen unter Anpassung an einen radialen Aufbau der zu bedämpfenden Spulenreihe verwendet. In diesem Fall wird die Mittellinie der Raute in Bewegungsrichtung entsprechend dem Radius der Flachspulenanordnung gebogen. Auf diese Weise erhält man eine ideale Annäherung der ausgewerteten Funktion an die Glockenkurve.

Die Erfindung benutzt ein Verfahren ähnlich dem, wie es aus der Druckschrift DE 10 2004 033 083 A1 bekannt ist. Aus dieser Druckschrift ist ein Wirbelstromsensor bekannt, der zur Weg- oder Winkelmessung verwendet werden kann. Er umfasst einen Sensor mit einer Spule (oder mit zwei Spulen) zur Erzeugung von Wirbelströmen in einem leitfähigen Geber. Der Geber und die Sensorspulen können relativ zueinander in einer Bewegungsrichtung bewegt werden. Eine Weg- oder Winkelmessung kann dadurch realisiert werden, dass der Geber eine leitfähige Spur aufweist, die derart gestaltet ist, dass sich die Impedanz der Spule(n) beim Abtasten der Spur in Bewegungsrichtung kontinuierlich ändert.

Die Signalauswertung kann nach dem Differenzprinzip erfolgen, d. h. es wird der Messwert aus der Differenz zweier Sensor-Signale ermittelt, wobei die Sensoren mechanisch gekoppelt sind und somit eine an sich störende, aber gleichartige Abstandsänderung bei der Bewegung erfahren. Der Einfluss des Abstandes kürzt sich dann bei der Differenzbildung heraus. Die Geberspur kann symmetrisch zu einer Mittellinie ausgebildet sein. Die Spur kann durch Aufbringen der leitfähigen Folie auf einen nicht leitfähigen Körper hergestellt werden. Geeignete Materialien für die Spur sind insbesondere Aluminium oder Kupfer.

Aus einem weiteren Stand der Technik gemäß DE 101 50 194 A1 ist es ferner bekannt, eine als Spule oder Antenne ausgebildete Leiterbahn auf einen Chipkartenkörper zu integrieren. Diese Leiterbahn kann aus leitfähigen Polymeren oder aus metallischen Werkstoffen (Kupfer, Aluminium) bestehen. Zur Verlegung der Leiterbahn und damit zur Herstellung der Spule oder Antenne kommt u. a. auch ein Heißprägeverfahren in Betracht.

Die im Folgenden beschriebenen Bedämpfungselemente werden benötigt, um Spulen zu bedämpfen. Solche induktiven Systeme werden z. B. für Lenkwinkelsensoren eingesetzt. Dabei werden bisher im Stand der Technik die speziellen Formen eines Bedämpfungselements aus einem Kupferblech gestanzt und mit Löchern versehen. Die gestanzten Kupferbleche werden dann mittels der Löcher gehalten und mit Kunststoff umspritzt, um beispielsweise für eine Winkelbestimmung einen sogenannten Rotor zu bilden. Dieses im Stand der Technik bekannte Verfahren weist einige Nachteile auf.

Ein großes Problem stellen die Haltelöcher in den Bedämpfungselementen dar, die zur Weiterverarbeitung während des Produktionsprozesses notwendig sind, da diese im späteren Einsatz Störungen bei der Signalauswertung der induktiven Sensorik verursachen.

Ebenso tritt das Problem auf, dass bei bestimmten Formen von Bedämpfungselementen (z. B. bei einer Raute) scharfe Kanten zwingend notwendig sind. Es ist schwierig, solche scharfen Kanten mittels Stanzen herzustellen bzw. eine solche Form beim Umspritzen mit dem Kunststoff im Werkzeug zu halten.

Im verarbeiteten Blech (Kupfer mit Kunststoff umspritzt) sind weitere Nachteile festzustellen. Aufgrund der verschiedenen Längenkoeffizienten kommt es zu einem Verziehen der Bauteile beim Abkühlen nach dem Umspritzen. Dieses Verziehen führt dazu, dass an sich erforderliche Fertigungstoleranzen nicht einzuhalten sind bzw. dass die verzogenen Bauteile Schwankungen in der Signalauswertung mit sich bringen.

Die Erfindung behebt auch diese Nachteile des Stands der Technik und benutzt ein Verfahren zur Herstellung eines induktiven Bedämpfungselements für den induktiven, auf der Basis einer Wirbelstromdämpfung arbeitenden Sensor, bei dem (i) Montagelöcher vermieden werden, mit dem (ii) scharfkantige Umrisse herstellbar sind und bei dem (iii) kein Verziehen des Trägers (Rotors oder Schlittens) eintritt.

Dies gelingt durch einen Schritt des Heißprägens einer Metallfolie auf den Träger, insbesondere auf einen Kunststoffträger. Bei dem Verfahren werden die Bedämpfungselemente als eine Folie, welche die gleichen elektrisch leitenden Eigenschaften wie ein Kupferblech besitzt, mittels Heißprägung auf dem Kunststoffteil aufgebracht. Es wird als günstig angesehen, die Folie von einer Rolle abzurollen, dann mit Hilfe eines Heißprägestempels auf den Kunststoffträger aufzubringen, gleichzeitig oder anschließend den Umriss auszustanzen, um dann die Restfolie mittels einer weiteren Rolle aufzuwickeln.

Dank dieses Verfahrens ist es möglich, auch die besonders scharfkantigen und komplexen Formen der erfindungsgemäßen Bedämpfungselemente zu realisieren. Der verwendete Heißprägestempel ist entsprechend der gewünschten Umrissform des Bedämpfungselements ausgebildet. Er dient nicht nur zur Übertragung der Folie auf das Kunststoffteil, sondern stanzt auch die Form aus. Auch ergibt sich die Oberfläche des Bedämpfungselements sehr eben oder planar, weil der Heißprägestempel die Folie mit einem gleichmäßigen Druck aufbringt.

Des Weiteren ist eine solche Metallfolie kostengünstiger als das bisher verwendete Kupfer- oder Metallblech. Als weiterer Vorteil sind die geringeren Toleranzen als bei herkömmlichen Verfahren zu nennen, da mit Hilfe des Heißprägens ein präzises Aufbringen möglich ist. Bei einer Änderung der herzustellenden Umrissform ist ein solches Verfahren von besonderem Vorteil, da hier lediglich der Prägestempel ausgetauscht werden muss, um neue Varianten herzustellen.

Rotoren mit Bedämpfungselementen, die nach dem erfindungsgemäßen Verfahren hergestellt sind, wurden im Hause der Anmelderin von den Erfindern getestet. Die Folie hat dabei die gleichen induktiven Eigenschaften wie ein Kupferblech. Auch haftet die Folie fest auf dem Kunststoff. Es konnten sämtliche Nachteile eliminiert werden, die bei den herkömmlichen Herstellungsverfahren auftreten.

Nachfolgend wird ein Ausführungsbeispiel des Wirbelstrombetätigungselements anhand von Figuren 1 bis 4 beschrieben. Die Umrissform des zugehörigen Bedämpfungselements und seine Wirkung wird in weiteren Figuren 5 bis 8 erläutert. Es zeigt:
- Figur 1:: einen Querschnitt eines Rotors mit einem Bedämpfungselement nach dem Stand der Technik, der nicht durch Temperaturänderungen verzogen ist (SOLL);
- Figur 2:: einen Querschnitt durch einen Rotor mit einem Bedämpfungselement nach dem Stand der Technik, der durch eine Temperaturänderung (Abkühlung) verzogen ist (IST);
- Figur 3:: einen Querschnitt durch einen Rotor mit einem Bedämpfungselement nach der Erfindung (POTENTIAL);
- Figur 4:: eine Aufsicht auf den Rotor gemäß Figur 3 (POTENTIAL) mit einem erfindungsgemäßen Bedämpfungselement;
- Figur 5:: die Verwendung eines rautenförmigen Bedämpfungselements zur Wegmessung;
- Figur 6a:: wie Figur 5, mit elektronischer Auswertung;
- Figur 6b:: wie Figur 6a, jedoch zur Winkelmessung;
- Figur 7:: Kennlinie "berechneter Weg oder Winkel" als Funktion des tatsächlichen Wegs oder Winkels, und
- Figur 8:: Ausführungsformen der Erfindung bezüglich des Materials (Figur 8a) oder bezüglich der modifizierten Umrissform (Figuren 8b, 8c und 8d).

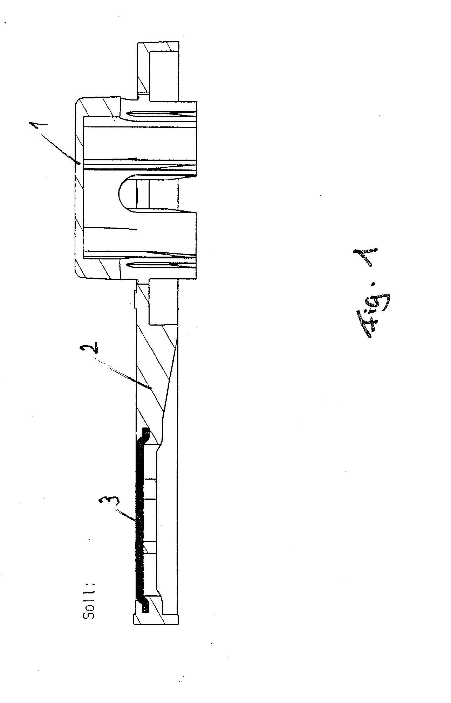

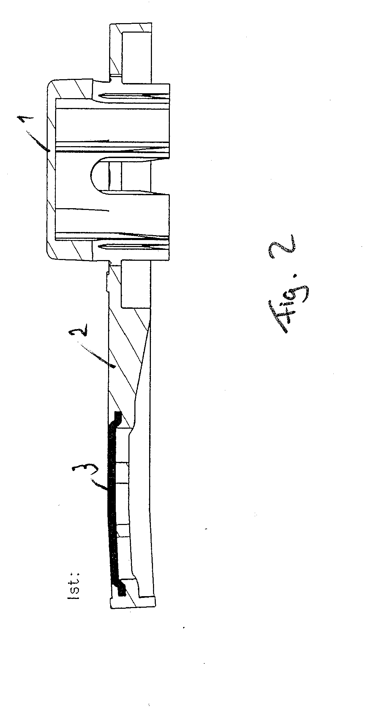

Die Figuren 1 und 2 zeigen Querschnitte durch einen Rotor 1 mit einem Bedämpfungselement 3 nach dem Stand der Technik. Das Bedämpfungselement 3 besteht aus einem Kupferblech, das in den Rotorarm 2 durch Spritzguss eingegossen, d. h. umspritzt ist. In Figur 1 sind die Soll-Dimensionen dargestellt, in denen der Rotor 1, 2, 3 nicht durch Temperaturänderungen verzogen ist; in Figur 2 sind Ist-Dimensionen dargestellt, in denen der Rotor 1, 2, 3 durch Temperaturänderungen, insbesondere durch die Abkühlung nach dem Spritzguss, verzogen ist.

Die Unterschiede zwischen den Soll-Dimensionen gemäß Figur 1 und den Ist-Dimensionen gemäß Figur 2 kommen durch unterschiedliche TemperaturAusdehnungskoeffizienten zustande. Das Kupfer- oder Aluminiumblech 3 hat einen anderen Längenausdehnungskoeffizienten als der Kunststoffarm 2. Dieses Verziehen führt dazu, dass entweder die Fertigungstoleranzen nicht eingehalten sind oder dass die temperaturempfindlichen Bauteile Schwankungen in der Signalauswertung mit sich bringen.

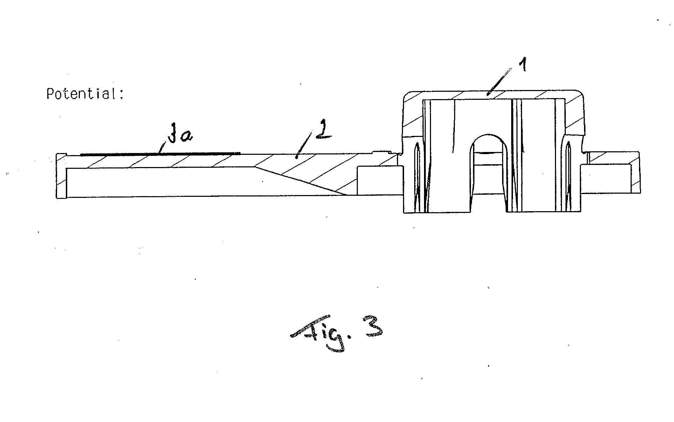

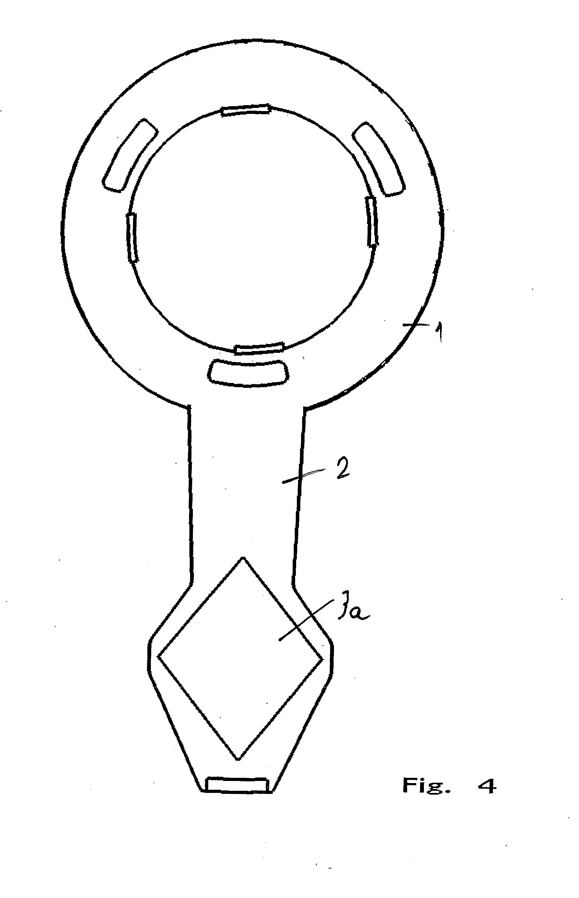

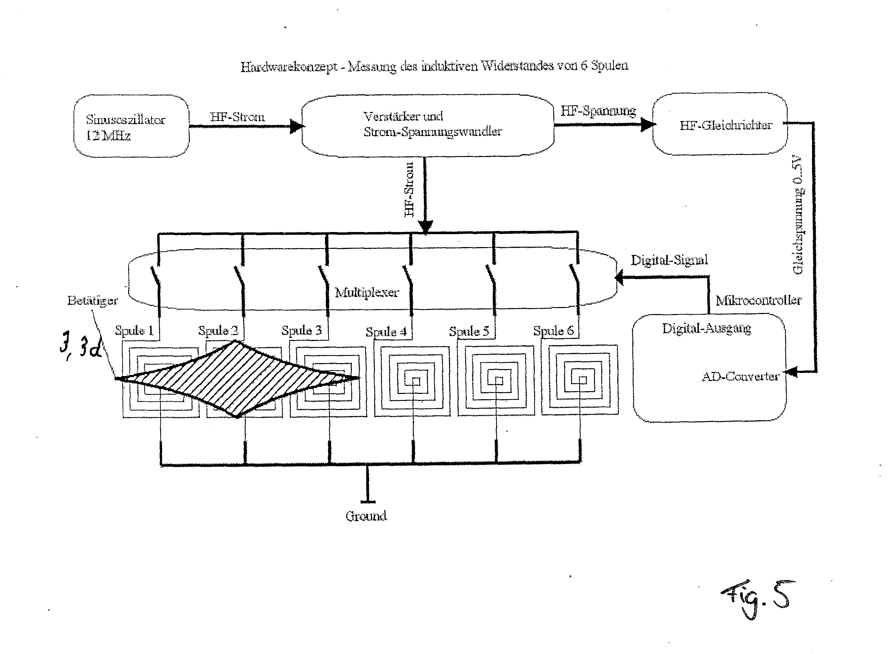

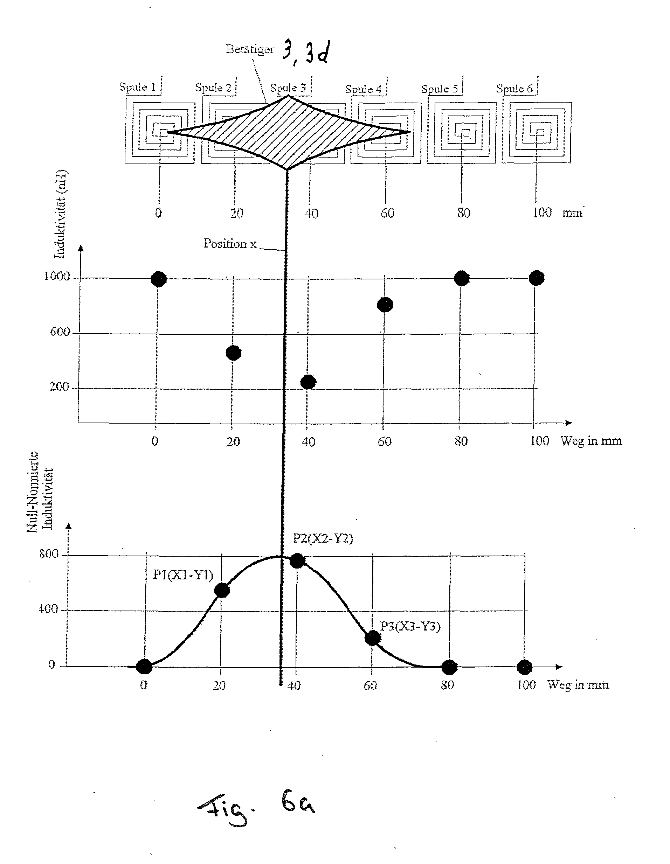

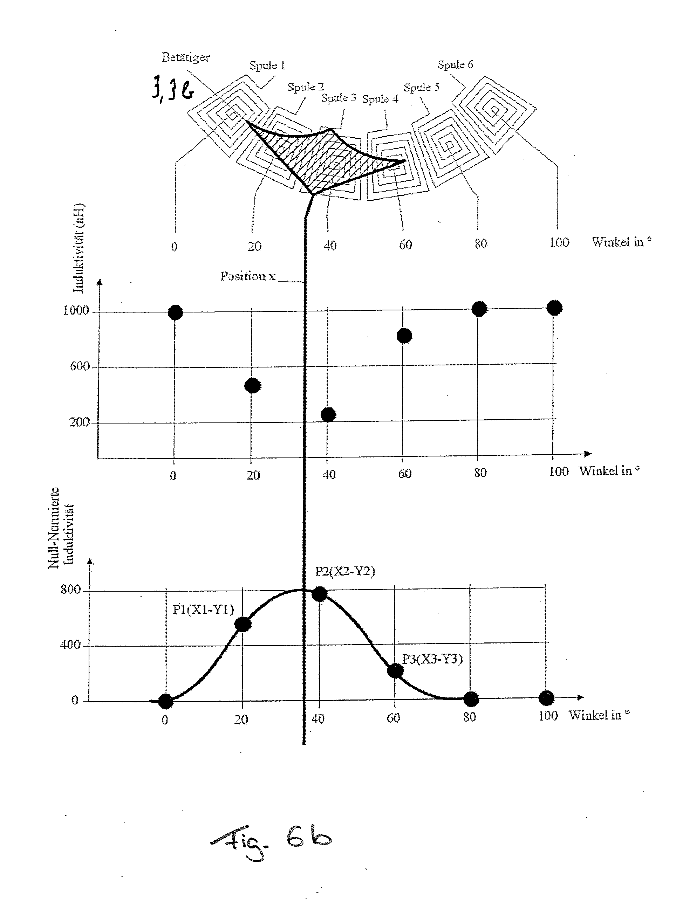

Demgegenüber ist in Figur 3 und Figur 4 ein erfindungsgemäßes Produkt dargestellt (in Figur 3 im Querschnitt und in Figur 4 in Aufsicht dargestellt), dessen Form erfindungsgemäß hergestellt ist. Eine Metallfolie 3a ist auf einem Träger aufgebracht, wobei der Träger insbesondere ein Kunststoffträger ist, der aus dem Rotor 1 und dem Rotorarm 2 besteht. Die Metallfolie 3a (Kupferfolie oder Aluminiumfolie oder dergleichen) hat die gleichen elektrisch leitenden Eigenschaften wie das Kupferblech 3 nach dem Stand der Technik gemäß Figur 1 und Figur 2. Die Umrissform der Metallfolie 3a ist gemäß Figur 4 scharfkantig und komplex. Insbesondere hat das induktive Betätigungselement 3a einen näherungsweise rautenförmigen Umriss. So zeigen Figur 5 und Figur 6a beispielsweise eine eingedellte Raute 3d sowie Figur 6b eine gebogene oder gekrümmte Raute 3b.

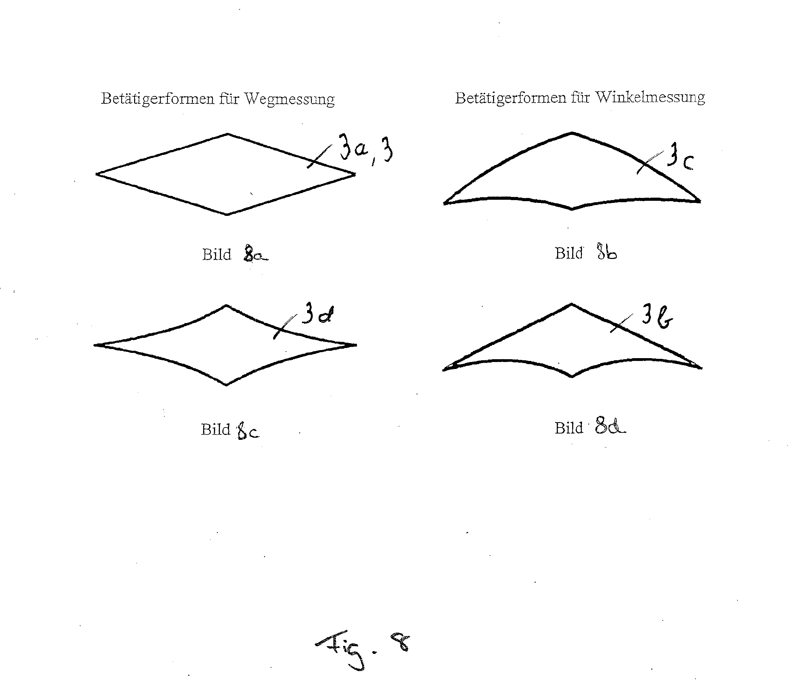

Die Figur 8 fasst die bevorzugten Rautenformen zusammen. Figur 8a zeigt eine klassische Rautenform nach dem Stand der Technik (3 als Metallblech, 3a als Metallfolie) für die Wegmessung, während die Figur 8c eine eingedellte Rautenform 3d für eine verbesserte Wegmessung zeigt. Die Figur 8b zeigt eine der Figur 8a (Wegmessung) entsprechende gebogene Rautenform 3c für die Winkelmessung, während die Figur 8d eine der Figur 8c (Wegmessung) entsprechende Rautenform 3b für eine verbesserte Winkelmessung zeigt.

Der Temperaturausdehnungskoeffizient der Metallfolie 3a in Figur 3 stimmt mit dem Temperaturausdehnungskoffizienten des Trägers oder Rotorarms 2 im Wesentlichen überein, weil die Metallfolie 3a dünn ist.

Das induktive Wirbelstrombetätigungselement für eine Messvorrichtung gemäß dem Patentanspruch 1 ist durch einen Schritt des Heißprägens der Metallfolie 3a auf den Träger (Kunststoffträger bestehend aus Rotor 1 und Rotorarm 2) hergestellt. Beim Heißprägen wird die Metallfolie 3a von einer Vorratsrolle abgerollt. Anschließend wird das Bedämpfungselement 3a durch einen Heißprägestempel auf den Kunststoffträger 1, 2 aufgebracht. Nach dem Aufbringen (oder gleichzeitig damit) stanzt der Heißprägestempel aus der Metallfolie das Bedämpfungselement 3a aus. Dann wird die restliche Metallfolie auf einer weiteren Rolle aufgewickelt.

Der Träger für das induktive Bedämpfungselement 3a kann ein zur Winkelmessung geeigneter Rotor 1 sein; der Träger kann jedoch auch zwecks Wegmessung von einem linear beweglichen Schlitten gebildet werden.

Das Heißprägen ist ein schneller und wirtschaftlicher Fertigungsprozess. Über ein beheiztes Prägewerkzeug, auf dem sich das Layout der Folie befindet, wird eine geeignete Metallfolie unter Druck und Wärme auf den Thermoplast gepresst. Die Folie wird beim Prägeprozess ausgestanzt und mit dem Kunststoff verschmolzen. Das Verfahren zeichnet sich durch wenige Arbeitsschritte und vergleichsweise geringe Investitionskosten aus; weiterhin sind Layoutänderungen schnell und preiswert möglich.

Geeignete Folien sind mit einer Dicke von 18 - 100 Mikrometer erhältlich. Auf der Folienunterseite befindet sich eine Schicht z.B. aus Braunoxid, die eine sehr gute Haftung der Folie auf dem Kunststoff ermöglicht. Aufgrund der verfügbaren Folienoberflächen ist der Heißprägeprozess auch für bleifreie Verbindungstechniken geeignet.

Eine Vielzahl von Thermoplasten ist für das Verfahren geeignet, insbesondere wenn sich das Layout in einer Ebene befindet. Für den Prägevorgang wird eine Servopresse eingesetzt, die sowohl auf Kraft als auch auf Weg geregelt werden kann. Die Presskraft beträgt beispielsweise 20 kN bei einer Spitzenkraft von 35 kN. Die Feinheit der Kraftauflösung liegt bei 10 N, die Feinheit der Wegauflösung ist auf 6 Mikrometer genau. Der Prägeverlauf wird messtechnisch erfasst. Für den Heißprägevorgang eignet sich besonders ein auf Kraft geregelter Prozess, bei dem nach Erreichen einer vorgegebenen Kraft der Prägeprozess beendet wird.

Eine Hochleistungspräge-Heizung bis zu 400° Celsius regelt die Temperatur auf +/- 1 ° Celsius genau.

Das Umrisslayout wird beispielsweise durch HSC-Fräsen in einen entsprechenden Prägestempel umgesetzt. Als Wirkstoff für den Prägestempel eignet sich beispielsweise ein härtbarer Stahl.

Die Spritzgießteile können sich nach dem Heißprägeprozess abhängig von den Thermoplasten mehr oder weniger stark verziehen. Der Verzug lässt sich stark reduzieren, wenn die Bauteile vor dem Prägeprozess getempert werden.

Die Figur 5 und die Figur 6a zeigt die Verwendung eines rautenförmigen Bedämpfungselements 3d zur Wegmessung. Es hat eine Rautenumrissform, bei der mindestens zwei Kanten nach innen gekrümmt sind. In Figur 5 und in Figur 6a ist die Mittellinie A-C der Raute A, B, C, D in Richtung der relativen Bewegung über die Spulenreihe hinweg eine Gerade. Dementsprechend wird eine lineare Reihenanordnung von Flachspulen zwecks Wegmessung überstrichen. Gemäß Figur 5 und Figur 6a sind für die Wegmessung alle vier Kanten a, b, c, d der Rautenumrissform A, B, C, D nach innen gekrümmt.

In Figur 6b ist die Mittellinie A-C der Raute in Richtung der relativen Bewegung ein Kreisbogen; dementsprechend wird eine kreisbogenförmige Reihenanordnung von Flachspulen zwecks Winkelmessung überstrichen. Für die Winkelmessung sind die im Inneren des Kreisbogens liegenden Kanten a, b regelmäßig stärker gekrümmt als die nach außen weisenden Kanten c, d. In Figur 6b sind die außen liegenden Kanten c, d beispielsweise ungekrümmt; sie können jedoch auch leicht konkav (nach innen gekrümmt) oder konvex (nach außen gekrümmt) sein. Die Figur 8 fasst die Ausführungsformen der Erfindung bezüglich des Materials (Figur 8a) und bezüglich der modifizierten Umrissform (Figuren 8c und 8d) zusammen. Die Folien 3a, 3b, 3c und 3d sind durch Heißprägen hergestellt und ausgestanzt. Die modifizierten Rauten-Umrissformen 3c und 3d erfüllen ihre Aufgabe auch dann, wenn sie nicht durch Heißprägen, sondern konventionell hergestellt sind, wie nachfolgend dargelegt wird.

Wenn die Kanten a, b, c, d gemäß Figur 5 und Figur 6a nach innen gebogen sind, so wird die ausgewertete Funktion so stark an eine Glockenkurve angenähert, dass kaum mehr Messfehler entstehen, d. h. die jetzt noch vorhandenen Messfehler sind für die Auswertung unerheblich. Ein Blockschaltbild der Auswertung ist in Figur 5 dargestellt.

Ein Sinusoszillator erzeugt einen Wechselstrom mit konstanter Amplitude und konstanter Frequenz von beispielsweise f = 12 MHz. Dieser Strom wird verstärkt und durch einen Multiplexer nacheinander in je eine der sechs Sensorspulen 1 bis 6 eingespeist. Die Spulenzahl ist variabel und wird durch den Messweg (oder Messwinkel) bestimmt.

Bewegt man den Betätiger 3 oder 3d, der aus gut elektrisch leitfähigem Material besteht, über die Spulen 1 bis 6, so verringert sich durch Wirbelstromverluste die Induktivität L der Spulen. Dadurch verringert sich auch der induktive Widerstand der Spulen proportional zu der Induktivität und zu der eingespeisten Frequenz.

Bedeckt der Betätiger 3, 3d eine Spule nicht, so weist sie eine Induktivität von beispielsweise 1000 nH auf. Bedeckt der Betätiger 3, 3d eine Spule voll, so weist sie eine Induktivität von beispielsweise 200 nH auf. Dieser Vorgang wird häufig als "Bedämpfung" bezeichnet. Der induktive Widerstand hat dann einen Betrag von 75 Ohm (nicht bedämpft) beziehungsweise 15 Ohm (bedämpft).

Der durch die Stromeinspeisung entstehende Spannungsabfall an den Spulen 1 bis 6 wird gleichgerichtet und einem Mikrokontroller (an einem Analog-Digital-Wandler-Eingang) zur Weiterverarbeitung zugeführt. Der Mikrokontroller misst zyklisch (insbesondere in festen Zeitabständen) die Spannungen der Sensorspulen 1 bis 6 (die wie gesagt proportional zu deren Induktivitäten sind) und speichert die Spannungen für jeweils einen Zyklus ab, danach erfolgt die Wegberechnung (vgl. Figur 6a) bzw. eine entsprechende Winkelberechnung (vgl. Figur 6b).

In Figur 6a und in Figur 6b sind im oberen Diagramm die sechs Messwerte der sechs Spulen für eine bestimmte Betätigerposition x eingetragen. Als Betätigerposition x wird der Mittelpunkt des rautenförmigen Betätigers A,B,C,D definiert. Von diesen sechs Werten wird in einem Suchalgorithmus der größte Messwert herausgesucht. Von diesem Maximalwert wird jeder der sechs Werte abgezogen, sodass das untere Diagramm in Figur 6a und Figur 6b entsteht. Dieser Schritt wird Null-Nominierung genannt, weil die Werte aller nicht vom Betätiger bedeckten Spulen auf diese Art etwa zu Null werden.

Der Verlauf dieser normierten Werte wird durch eine Glockenkurve der Gleichungsform y = a ^{·} e ^{-b (x-c)2} angenähert. Die genaue Betätigerposition x ergibt sich als Ort des Maximums der Glockenkurve.

Da die Gleichung der Glockenkurve drei unbekannte Parameter a, b und c enthält, müssen drei Gleichungen aufgestellt werden, um den Parameter c berechnen zu können. Der Parameter c ist der Ort des Scheitelpunkts oder Maximums. Da die Spulenabstände in der Regel gleich groß sind, wird die Lösung des Gleichungssystems etwas vereinfacht.

Als ideal für diese Berechnung hat sich eine Betätigerform erwiesen, die
- im Prinzip rautenförmig ist,
- eine Länge hat, die etwa der dreifachen Spulenlänge entspricht,
- die Breite einer Spulenbreite hat, und
- deren Kanten leicht nach innen gebogen sind.

Der Vorteil gegenüber einer Schwerpunktberechnung gemäß EP 1 688 709 A2 besteht darin, dass nur die drei am stärksten bedämpften Spulenwerte für die Auswertung herangezogen werden. Dadurch beeinflussen Offsetfehler der nicht bedämpften Spulen das Ergebnis nicht. Ferner ist der Rechenaufwand nicht von der Anzahl der Spulen abhängig.

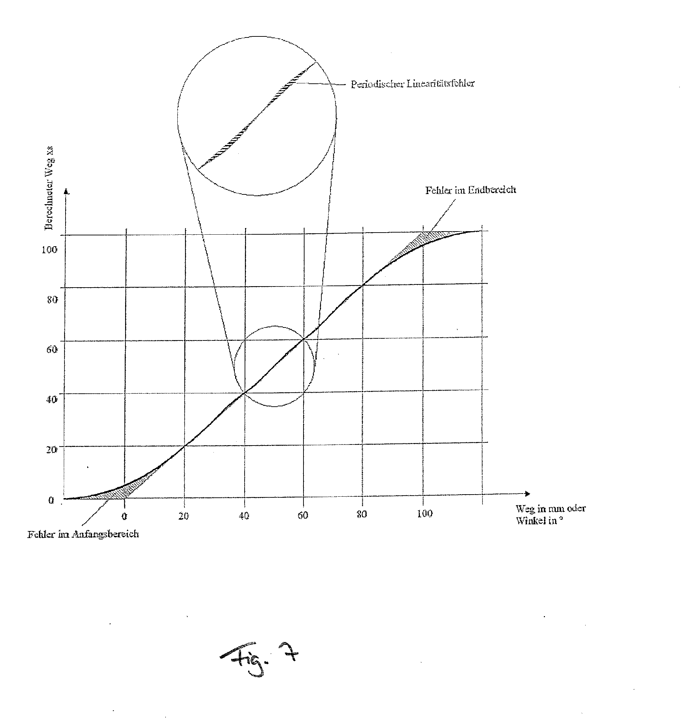

Die Vorteile andererseits gegenüber einer Scheitelpunktberechnung nach einer Parabelinterpolation bestehen darin, dass die Interpolation mit einer Parabel nicht exakt mit den Messpunkten übereinstimmt. Es ist zwar eine gute Annäherung der Parabel an die Messpunkte möglich, jedoch bleibt immer ein Restfehler. Somit kann der sogenannte periodische Lineraritätsfehler nicht eliminiert werden. Nachfolgend wird anhand von Figur 7 dargelegt, wie bei der Erfindung der periodische Lineraritätsfehler eliminiert wird.

Wird der Betätiger über den Weg (oder analog über den Winkel) im Bereich einer Spule bewegt, so erhält man - abgesehen von den Fehlern im Anfangsbereich und im Endbereich - eine im wesentlichen linear und stetig ansteigende Kurve. Dies gilt aber nur, solange sich der Mittelpunkt des Betätigers zwischen der zweiten und der vorletzten Spule befindet; sonst lassen sich die Fehler im Anfangs- und Endbereich nicht mehr vernachlässigen. Befindet sich der Betätiger weit links (vor der zweiten) oder weit rechts (hinter der vorletzten) Spule, so kann der Glockenkurven-Messwert y(x) des linken bzw. des rechten Nachbarpunktes als Null angenommen werden. Somit kann zwar der Messbereich nach links oder rechts erweitert werden, jedoch entsteht dabei ein Fehler, der umso größer ist, je weiter sich der Betätiger vom linearen Messbereich entfernt.

Weiterhin besteht gemäß Figur 7 ein periodischer Linearitätsfehler im mittleren Bereich (vergrößert dargestellt). Dieser periodische auftretende Fehler ist von der Übereinstimmung der idealen Glockenkurve mit den normierten Messwerten abhängig. Je genauer die Übereinstimmung ist, desto geringer wird dieser Fehler. Bei exakter Übereinstimmung verschwindet der periodische Linearitätsfehler, was durch die erfindungsgemäße Rautenform erreicht wird.

### Bezugszeichen

- 1: Rotor
- 2: Rotorarm
- 3: Bedämpfungselement bzw. induktives Wirbelstrombetätigungselement aus Metallblech
- 3a: Folie als Bedämpfungselement in Rautenform
- 3b: Bedämpfungselement in modifizierter Rautenform
- 3c: Bedämpfungselement in fledermausartiger Rautenform (Batman)
- 3d: Betätigungselement in eingedellter Rautenform
- a, b, c, d: Kanten der Rautenform
- A, B, C, D: Ecken der Rautenform
- x: Position des Betätigers
- y: null-normierter Messwert einer Sensorspule 1* bis 6*

## Patentansprüche

1. Messvorrichtung für eine Winkelmessung, um eine Position eines einzigen Bedämpfungselements (3; 3a; 3b: 3c; 3d) in Form einer einzigen Raute der Messvorrichtung relativ zu einer Spulenreihe festzustellen, wobei das einzige Bedämpfungselement (3; 3a; 3b: 3c; 3d) der Messvorrichtung in einem vorgegebenen Abstand über der als eine Reihe von dicht aneinander liegenden Sensorspulen, die als Flachspulen oder planare Spulenausgeformt sind, ausgebildeten Spulenreihe relativ hinwegbewegbar ist, um durch eine Wirbelstromdämpfung die Induktivität von im Wesentlichen drei Sensorspulen zu beeinflussen, wobei die in Richtung der relativen Bewegung liegende Mittellinie des Bedämpfungselements (3; 3a; 3b: 3c; 3d) ein Kreisbogen ist und eine kreisbogenförmige Reihenanordnung der Sensorspulen zwecks Winkelmessung überstrichen wird, wobei mindestens zwei benachbarte Kanten einer Rautenumrissform des Bedämpfungselements (3; 3a; 3b: 3c; 3d) nach innen gekrümmt sind, derart, dass die im Inneren des Kreisbogens liegenden Kanten stärker gekrümmt sind als die nach außen weisenden Kanten der Rautenumrissform und derart, dass die außen liegenden Kanten konkav nach innen gekrümmt oder ungekrümmt oder konvex nach außen gekrümmt sind, wobei eine Länge des Bedämpfungselements (3; 3a; 3b: 3c; 3d) einer dreifachen Länge einer der Sensorspulen entspricht, mit einer Einrichtung zum Einspeisen eines Wechselstroms in jede der Sensorspulen und einer Einrichtung zum Einlesen eines Spannungswerts von jeder der Sensorspulen, wobei die Spannungswerte proportional zu einer durch die Wirbelstromdämpfung der Sensorspulen durch das Bedämpfungselement (3; 3a; 3b: 3c; 3d) beeinflussten Induktivität der Sensorspulen sind.

2. Messvorrichtung nach Anspruch 1, bei dem vier Kanten der Rautenumrissform nach innen gekrümmt sind.

3. Messvorrichtung nach einem der Ansprüche 1 bis 2, **dadurch gekennzeichnet, dass** die Messvorrichtung einen Träger, insbesondere Kunststoffträger, mit einer darauf heißgeprägten Metallfolie als induktives, näherungsweise rautenförmiges Bedämpfungselement (3; 3a; 3b: 3c; 3d) umfasst.

4. Messvorrichtung nach Anspruch 3, **dadurch gekennzeichnet, dass** die Metallfolie des Bedämpfungselements (3; 3a; 3b: 3c; 3d) die gleichen elektrisch leitenden Eigenschaften wie ein Kupferblech besitzt.

5. Messvorrichtung nach Anspruch 3 bis 4, **dadurch gekennzeichnet, dass** ein Temperaturausdehnungskoeffizient der Metallfolie mit einem Temperaturausdehnungskoeffizienten des Trägers im Wesentlichen übereinstimmt.

6. Messvorrichtung nach einem der Ansprüche 3 bis 5, **dadurch gekennzeichnet, dass** die Dicke der Metallfolie zwischen 18 und 100 Mikrometern beträgt.

7. Messvorrichtung nach einem der vorangegangenen Ansprüche, **gekennzeichnet durch** eine scharfkantige Form des ausgestanzten Bedämpfungselements (3; 3a; 3b: 3c; 3d).

## Claims

1. Measuring device for angle measurement, to determine a position of a single damping element (3; 3a; 3b; 3c; 3d) in the form of a single rhombus of the measuring device in relation to a series of coils, wherein the single damping element (3; 3a; 3b; 3c; 3d) of the measuring device can be moved relatively at a preset distance over the series of coils formed as a series of sensor coils lying closely together, which are configured as flat coils or planar coils, in order to influence the inductivity of substantially three sensor coils by eddy current damping, wherein the centre line of the damping element (3; 3a; 3b; 3c; 3d) lying in the direction of relative movement is an arc of a circle and an arcuate series arrangement of the sensor coils is passed over for the purpose of angle measurement, wherein at least two neighbouring edges of a rhombus outline shape of the damping element (3; 3a; 3b; 3c; 3d) are curved inwards in such a way that the edges lying within the arc are curved more than the outwardly facing edges of the rhombus outline shape and in such a way that the outer edges are curved concavely inwards or are uncurved or are curved convexly outwards, wherein a length of the damping element (3; 3a; 3b; 3c; 3d) corresponds to three times the length of one of the sensor coils, with a means for feeding an alternating current into each of the sensor coils and a means for reading in a voltage value of each of the sensor coils, wherein the voltage values are proportional to an inductivity of the sensor coils influenced by the eddy current damping of the sensor coils by the damping element (3; 3a; 3b; 3c; 3d).

2. Measuring device according to Claim 1, in which four edges of the rhombus outline shape are curved inwards.

3. Measuring device according to either of Claims 1 and 2, **characterized in that** the measuring device comprises a carrier, in particular a plastic carrier, with a metal foil hot-stamped thereupon, as an inductive, approximately rhomboidal damping element (3; 3a; 3b; 3c; 3d).

4. Measuring device according to Claim 3, **characterized in that** the metal foil of the damping element (3; 3a; 3b; 3c; 3d) has the same electrically conducting properties as a copper sheet.

5. Measuring device according to Claims 3 and 4, **characterized in that** a coefficient of thermal expansion of the metal foil substantially coincides with a coefficient of thermal expansion of the carrier.

6. Measuring device according to one of Claims 3 to 5, **characterized in that** the thickness of the metal foil is between 18 and 100 micrometres.

7. Measuring device according to one of the preceding claims, **characterized by** a sharp-edged form of the punched-out damping element (3; 3a; 3b; 3c; 3d).

## Revendications

1. Dispositif de mesure pour une mesure angulaire, afin de déterminer une position d'un unique élément d'amortissement (3 ; 3a ; 3b ; 3c ; 3d) sous la forme d'un unique losange du dispositif de mesure par rapport à une rangée de bobines, l'unique élément d'amortissement (3 ; 3a ; 3b ; 3c ; 3d) du dispositif de mesure pouvant être déplacé relativement à un écart prédéfini par-dessus de la rangée de bobines configurée sous la forme d'une rangée de bobines de détection placées très proches les unes des autres, lesquelles sont façonnées en tant que bobines plates ou bobines planes, afin d'influencer par un amortissement du courant de Foucault l'inductance de sensiblement trois bobines de détection, la ligne médiane de l'élément d'amortissement (3 ; 3a ; 3b ; 3c ; 3d) qui se trouve dans la direction du mouvement relatif étant un arc de cercle et un arrangement de rangées en forme d'arc de cercle des bobines de détection étant balayé en vue de la mesure angulaire, au moins deux bords voisins d'une forme de contour de losange de l'élément d'amortissement (3 ; 3a ; 3b ; 3c ; 3d) étant courbés vers l'intérieur de telle sorte que les bords qui se trouvent à l'intérieur de l'arc de cercle sont plus fortement courbés que les bords de la forme de contour de losange dirigés vers l'extérieur, et de telle sorte que les bords qui se trouvent à l'extérieur sont courbés de manière concave vers l'intérieur ou non courbés ou encore courbés de manière convexe vers l'extérieur, une longueur de l'élément d'amortissement (3 ; 3a ; 3b ; 3c ; 3d) correspondant à un triple de la longueur de l'une des bobines de détection, comprenant un dispositif pour injecter un courant alternatif dans chacune des bobines de détection et un dispositif pour relever une valeur de tension auprès de chacune des bobines de détection, les valeurs de tension étant proportionnelles à une inductance des bobines de détection influencée par l'amortissement du courant de Foucault des bobines de détection par l'élément d'amortissement (3 ; 3a ; 3b ; 3c ; 3d).

2. Dispositif de mesure selon la revendication 1, avec lequel quatre bords de la forme de contour de losange sont courbés vers l'intérieur.

3. Dispositif de mesure selon l'une des revendications 1 à 2, **caractérisé en ce que** le dispositif de mesure comprend un support, notamment un support en matière plastique, sur lequel est estampé à chaud un film métallique faisant office d'élément d'amortissement (3 ; 3a ; 3b ; 3c ; 3d) inductif, quasiment en forme de losange.

4. Dispositif de mesure selon la revendication 3, **caractérisé en ce que** le film métallique de l'élément d'amortissement (3 ; 3a ; 3b ; 3c ; 3d) possède les mêmes propriétés de conduction électrique qu'une tôle en cuivre.

5. Dispositif de mesure selon les revendications 3 à 4, **caractérisé en ce qu'**un coefficient de dilatation thermique du film métallique coïncide sensiblement avec un coefficient de dilatation thermique du support.

6. Dispositif de mesure selon l'une des revendications 3 à 5, **caractérisé en ce que** l'épaisseur du film métallique est comprise entre 18 et 100 micromètres.

7. Dispositif de mesure selon l'une des revendications précédentes, **caractérisé par** une forme à bords vifs de l'élément d'amortissement (3 ; 3a ; 3b ; 3c ; 3d) estampé.
